# EUROPÄISCHE PATENTANMELDUNG

(11) **EP 2 644 945 A1**
(43) Veröffentlichungstag der Anmeldung: **02.10.2013**
(21) Anmeldenummer: 13161286.3
(22) Anmeldetag: 27.03.2013
(51) Int. Cl.: F16H 47/02

(54) **Fahrzeuggetriebe**

(30) Priorität: 27.03.2012 AT 3692012
(71) Anmelder: Reformwerke Bauer & Co. Gesellschaft m.b.H., 4600 Wels (AT)
(72) Erfinder: Gattermair, Gerhard, 4707 Schlüßlberg (AT)
(74) Vertreter: Itze, Peter

(57) **Zusammenfassung**

Beim Erfindungsgegenstand handelt es sich um ein Fahrzeuggetriebe, insbesondere für geländegängige Fahrzeuge und/oder Arbeitsmaschinen, bei welchen mehrere Gänge synchronisiert schaltbar sind. Um eine möglichst gleichmäßige und von Schaltvorgängen unabhängige Fahrweise zu ermöglichen, wie sie bei insbesondere bei heiklen Arbeitsgängen oder im alpinen Bereich und landwirtschaftlichen Bereich erforderlich sein können, ist dem Schaltstrang des Getriebes 3 ein von einer vom Fahrzeugmotor 1 angetriebenen Hydraulikpumpe 9 beaufschlagbarer Hydraulikmotor 10 ein- bzw. auskuppelbar vorgeschaltet.

## Beschreibung

Die Erfindung bezieht sich auf ein Fahrzeuggetriebe, insbesondere für geländegängige Fahrzeuge und/oder Arbeitsmaschinen, bei welchem mehrere Gänge synchronisiert schaltbar sind.

Wie angeführt ist das Getriebe insbesondere für geländegängige Fahrzeuge, also Arbeitsfahrzeuge im landwirtschaftlichen Bereich bzw. im Bergbereich oder aber auch für Arbeitsmaschinen gedacht, bei welchen eine gute Geländegängigkeit und eine hohe Betriebssicherheit verlangt wird. Bei solchen Fahrzeugen im alpinen landwirtschaftlichen Bereich sowie auch im kommunalen Bereich werden derzeit für Geländefahrten oder Arbeitseinsatz in extremen Hanglagen und kritischen Umgebungsbedingungen zwei verschiedene Vorgehensweisen eingesetzt. Einerseits werden komplexe mechanische vielstufige Schaltgetriebe eingesetzt, womit prinzipiell jeder optimale Drehzahlbereich der Antriebsräder über Kupplung zu schalten ist und sich daraus unterschiedliche Drehzahlbereiche des Antriebsmotors und damit auch unterschiedliche Leistungsangaben ergeben. Diese Ausbildungen weisen allerdings den Nachteil auf, dass trotz vieler Abstufungen eben immer nur stufenweise geschaltet werden kann, wobei immer bei jedem Schaltvorgang ausgekuppelt werden muss, womit der Kraftfluss zwischen Motor und angetriebenen Rädern unterbrochen wird.

Diese Nachteile werden gegebenenfalls mit hydrostatischen Getrieben vermieden, jedoch weisen diese Getriebe deutlich niedrigere Wirkungsgrade auf als Schaltgetriebe. Allerdings haben sie den Vorteil einer stufenlosen Drehzahlanpassung bei weitgehend optimalem Drehzahlbereich des Antriebsaggregats. Ein weiterer Nachteil des rein hydrostatischen Antriebs solcher Fahrzeuge besteht auch darin, dass ein hoher Gewichtsanteil vorliegt, da der hydrostatische Antrieb auf das volle Antriebsdrehmoment ausgelegt sein muss.

Der Erfindung liegt die Aufgabe zu Grunde, ein Getriebe der eingangs genannten Art so zu verbessern, dass die Nachteile des mechanischen Schaltgetriebes und des hydrostatischen Getriebes vermieden werden.

Erfindungsgemäß wird diese Aufgabe dadurch gelöst, dass dem Schaltstrang des Getriebes ein von einer vom Fahrzeugmotor angetriebenen Hydraulikpumpe beaufschlagbarer Hydraulikmotor ein- bzw. auskuppelbar vorgeschaltet ist. Damit werden die Vorteile beider Antriebskonzepte genutzt und die Nachteile der jeweiligen Einzelsysteme vermieden.

Vorteilhafter Weise kann die Hydraulikpumpe der Fahrzeugkupplung nachgeschaltet eingangsseitig des Getriebes angebracht und an die Getriebeantriebswelle an- bzw. von dieser abkuppelbar sein. Damit wird erreicht, dass die Antriebshydraulik für das Fahrzeug unabhängig von einer allfällig im Fahrzeug vorhandenen Hydraulik betätigt werden kann, das heißt, dass von einer allfällig vorhandenen Zapfwelle angetriebene Arbeitsgeräte unabhängig von der Motordrehzahl und der Hydraulik des Fahrantriebes gesteuert werden können. Weiters kann die Drehrichtung des Hydraulikmotors über ein Steuerventil umkehrbar sein, was den Vorteil hat, dass eine Fahrtrichtungsumkehr ohne den Motor auf Leerlaufdrehzahl herabfallen zu lassen und mechanisch im Getriebe zu schalten vorgenommen werden kann, was insbesondere für Manöver in schwierigem Gelände sehr vorteilhaft ist. Schließlich kann die Drehzahl des Hydraulikmotors insbesondere über ein Steuerventil unabhängig von der Drehzahl des Fahrzeugmotors regelbar sein, womit erreicht wird, dass der Fahrzeugmotor immer im optimalen Drehzahlbereich läuft und der Antrieb bzw. die Vorschubgeschwindigkeit des Fahrzeuges je nach den Geländegegebenheiten und den ausgeführten Arbeiten gesteuert werden kann.

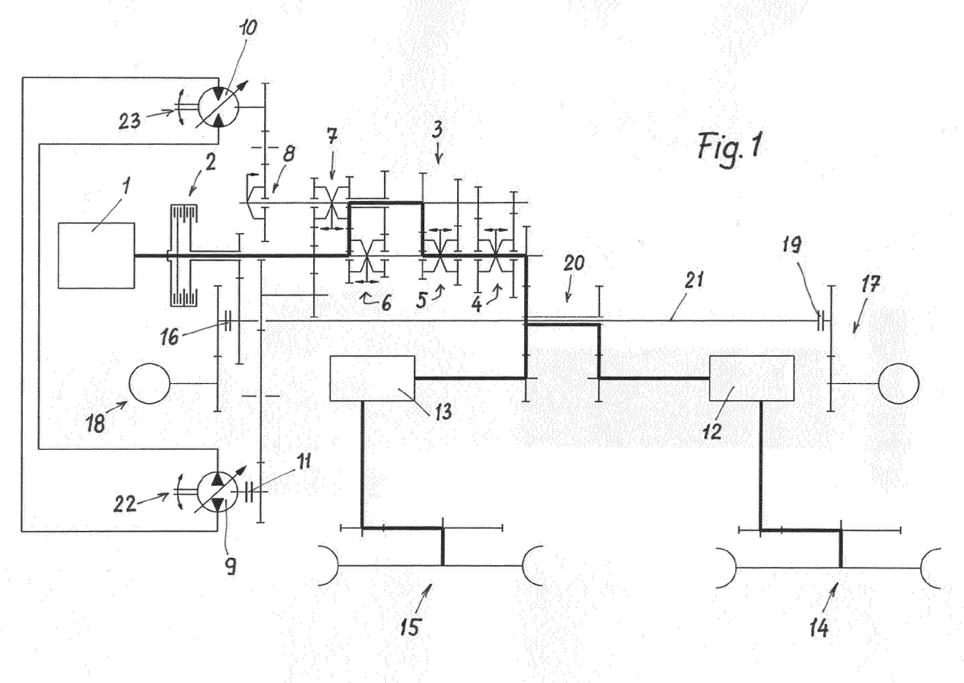

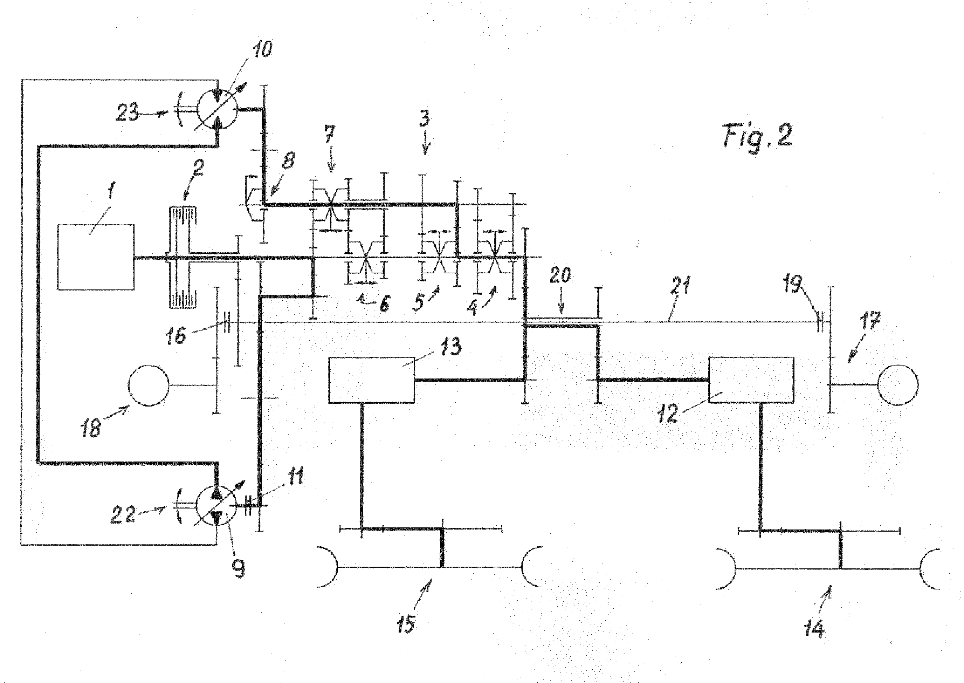

In der Zeichnung ist ein Ausführungsbeispiel des Erfindungsgegenstandes dargestellt, wobei in Figur 1 mit dick ausgezogener Linie der Kraftfluss bei normaler Fahrt und Schaltgetriebe eingezeichnet ist und in Figur 2 der Kraftfluss bei vorgeschalteten Hydraulikantrieb.

Mit 1 ist der Antriebsmotor des Fahrzeuges bezeichnet, welcher über eine Fahrzeugkupplung 2 das Schaltgetriebe 3 antreibt. In dem Schaltgetriebe sind eine normale Gangschaltung 4 bzw. 5 für die Gänge 1, 2 bzw. 3 und 4 sowie ein Zwischengetriebe 6 für eine engere Abstufung der Gänge vorgesehen. Weiters weist das Getriebe eine Schaltung für Vorwärts-und Rückwärtsfahren 7 auf.

Mit 8 ist die Kupplung eines Hydraulikantriebes bezeichnet, welcher aus einer geregelten Hydraulikpumpe 9 und einem geregeltem Hydraulikmotor 10 besteht, bezeichnet. Die am Motor bzw. der Pumpe serienmäßig angebrachten Steuerventile sind mit 22 und 23 bezeichnet, und dienen sowohl der Drehzahlregelung wie auch der Drehrichtung des Hydraulikmotors.

Die Hydraulikpumpe 9 ist über eine Kupplung 11 und entsprechende Zwischenzahnräder vom Antriebsmotor 1 her antreibbar.

Mit 12 und 13 sind Differenziale bzw. Differenzialsperrgetriebe für die Hinterräder 14 bzw. für die Vorderräder 15 bezeichnet, welche allerdings Stand der Technik sind.

Mit 16 ist die Kupplung für die vordere Zapfwelle 18 und mit 19 die Kupplung für die hintere Zapfwelle 17 bezeichnet, wobei die Zapfwellenantriebswelle 21 über eine gesonderte Partition der Fahrkupplung 2 zu- bzw. abschaltbar ist.

Bei Betrieb des Fahrzeuges im Normalbetrieb wie es in Figur 1 durch die stark ausgezogene Linie wiedergegeben ist, erfolgt der Kraftfluss vom Motor 1 über die Kupplung 2 das Zwischengetriebe 6 sowie das Schaltgetriebe 5 (vierter Gang) und die beiden Differenziale 12 und 13 an die Antriebsräder 14 und 15. Wie dargestellt ist im vorliegenden Fall ein Vierradantrieb permanent vorgesehen, wobei die Verteilung zwischen Vorderrädern 15 und Hinterrädern 14 über ein Vorgelege 20 erfolgt, welches aus einer Hohlwelle besteht, durch welche die Zapfwellenantriebsschwelle 21 hindurchgeführt ist, welche an einem Ende die Kupplung 16 für die vordere Zapfwelle 18 und am anderen Ende die Kupplung 19 für die hintere Zapfwelle 17 antreibt.

Wenn hingegen ein hydraulischer Antrieb gewünscht wird, so erfolgt gemäß Figur 2 der Antriebsfluss über die Kupplung 11 zur Hydraulikpumpe 9, welche den Hydraulikmotor 10 antreibt, der über die Zuschaltung 8 das mechanische Getriebe analog den Verlauf gemäß Figur 1 antreibt. Dabei ist allerdings ein niedrigerer Gang, im vorliegenden Fall der dritte Gang, geschaltet.

Bei dieser hydraulischen Ausführung kann die Fahrgeschwindigkeit über die Drehzahl der regelbaren Hydraulikpumpe und/ oder mittels der Fahrzeugmotordrehzahl oder dem gesondert regelbaren Hydraulikmotor 10 entsprechend geregelt werden, wobei mittels dieses Hydraulikmotors 10 ein gleichmäßiger Fahrantrieb erfolgen kann und zwar ohne dass die mechanischen Gänge gewechselt werden müssen.

Es ist somit mit dem Anmeldungsgegenstand eine Kombination aus hydraulischem Antrieb und Schaltgetriebe möglich, was für heikle Geländefahrten bzw. heikle Arbeiten im alpinen Bereich besonders vorteilhaft ist.

### Bezugszeichenliste

| | |
|---|---|
| 1 | Antriebsmotor |
| 2 | Fahrzeugkupplung |
| 3 | Schaltgetriebe |
| 4 | Schaltstufe 1. und 2. Gang |
| 5 | Schaltstufe 3. und 4. Gang |
| 6 | Zwischengetriebe |
| 7 | Vorwärts bzw. Rückwärtseinschaltgetriebe (mechanisch) |
| 8 | mechanische bzw. hydraulische Umschaltung |
| 9 | Hydraulikpumpe |
| 10 | Hydraulikmotor |
| 11 | Kupplung |
| 12 | Differenzialsperre Hinterräder |
| 13 | Differenzialsperre Vorderräder |
| 14 | Hinterräder |
| 15 | Vorderräder |
| 16 | Kupplung für Zapfwellen vorne |
| 17 | hintere Zapfwelle |
| 18 | vordere Zapfwelle |
| 19 | Kupplung für Zapfwellen hinten |
| 20 | Vorgelege |
| 21 | Zapfwellenantriebswelle |
| 22 | Steuerventil |
| 23 | Steuerventil |

## Patentansprüche

1. Fahrzeuggetriebe, insbesondere für geländegängige Fahrzeuge und/oder Arbeitsmaschinen, bei welchem mehrere Gänge synchronisiert schaltbar sind, **dadurch gekennzeichnet, dass** dem Schaltstrang des Getriebes (3) ein von einer vom Fahrzeugmotor (1) angetriebenen Hydraulikpumpe (9) beaufschlagbarer Hydraulikmotor (10) ein- bzw. auskuppelbar vorgeschaltet ist.

2. Fahrzeuggetriebe nach Anspruch, **dadurch gekennzeichnet, dass** die Hydraulikpumpe (9) der Fahrzeugkupplung (2) nachgeschaltet eingangsseitig des Getriebes (3) angebracht und an die Getriebeantriebswelle an- bzw .von dieser abkuppelbar ist.
